# EUROPÄISCHE PATENTSCHRIFT

(11) **EP 3 123 089 B1**
(45) Veröffentlichungstag und Bekanntmachung des Hinweises auf die Patenterteilung: **17.02.2021**
(21) Anmeldenummer: 15706828.9
(22) Anmeldetag: 27.02.2015
(51) Int. Cl.: F25D 27/00

(54) **HAUSHALTSKÄLTEGERÄT MIT EINER INNENRAUMBELEUCHTUNG UND VERFAHREN ZUM BETREIBEN EINER INNENRAUMBELEUCHTUNG EINES HAUSHALTSKÄLTEGERÄTES**
DOMESTIC REFRIGERATION DEVICE HAVING AN INTERIOR LIGHTING SYSTEM, AND METHOD FOR OPERATING AN INTERIOR LIGHTING SYSTEM OF A DOMESTIC REFRIGERATION DEVICE
RÉFRIGÉRATEUR DOMESTIQUE ÉQUIPÉ D'UN ÉCLAIRAGE INTÉRIEUR ET PROCÉDÉ SERVANT À FAIRE FONCTIONNER UN ÉCLAIRAGE INTÉRIEUR D'UN RÉFRIGÉRATEUR DOMESTIQUE

(30) Priorität: 27.03.2014 DE 102014205727
(43) Veröffentlichungstag der Anmeldung: 01.02.2017
(73) Patentinhaber: BSH Hausgeräte GmbH, 81739 München (DE)
(72) Erfinder: OSBAR, Bernd, 73430 Aalen (DE); SCHMID, Christian, 89165 Dietenheim (DE); WEBER, Armin, 73466 Lauchheim (DE); EICHER, Max, 80689 München (DE); KLEINLEIN, Philipp, 81371 München (DE); DANLER, Andreas, A-6176 Völs (AT); GSTREIN, Manfred, A-6067 Absam (AT); SEEBACHER, Georg, A-6176 Völs (AT)
(86) Internationale Anmeldenummer: PCT/EP2015/054161
(87) Internationale Veröffentlichungsnummer: WO 2015/144385

(56) Entgegenhaltungen:
- JP-A- 2007 017 068
- US-A1- 2011 005 258

## Beschreibung

Die Erfindung betrifft ein Haushaltskältegerät mit einer Innenraumbeleuchtung und ein Verfahren zum Betreiben einer Innenraumbeleuchtung eines Haushaltskältegerätes.

Haushaltskältegeräte umfassen eine insbesondere als Kältemittelkreislauf ausgeführte Kältevorrichtung und einen wärmeisolierten Korpus mit einem kühlbaren Innenbehälter, welcher einen zum Lagern von Lebensmitteln vorgesehenen kühlbaren Innenraum begrenzt, der mittels der Kältevorrichtung gekühlt wird. Haushaltskältegeräte umfassen ferner ein Türblatt zum Öffnen und Verschließen des kühlbaren Innenraums und eine Innenraumbeleuchtung, welche bei geöffnetem Türblatt eingeschaltet ist.

Die WO 03/010474 A1 offenbart ein Kältegerät mit einer Innenraumbeleuchtung und einer Steuerschaltung zum Steuern der Leistung der Innenraumbeleuchtung in Abhängigkeit von der Intensität des Umgebungslichtes und die WO 2912/163776 A2 offenbart ein Haushaltskältegerät mit einer Innenraumbeleuchtung, welche bei geöffnetem Türblatt den Innenraum mit einer ersten Farbe und beim Unterschreiten der Helligkeit der Umgebung des Haushaltskältegeräts unterhalb eines vorgegebenen Wertes mit einer zweiten Farbe beleuchtet. Die erste Farbe ist dunkler als die zweite Farbe.

Die JP 2007 017068 A offenbart ein Haushaltskältegerät mit einem kühlbaren Innenraum, an dessen Rückwand mehrfarbige LEDs angeordnet sind, wodurch es möglich ist, den kühlbaren Innenraum mit verschiedenen Farben auszuleuchten.

Die US 2011/005258 A1 offenbart die Intensität des Lichtes der Umgebung zu erkennen, um entsprechend die Intensität des Lichts innerhalb eines Kältegerätes einzustellen.

Die US 2010/0220460 A1 offenbart ein Haushaltskältegerät mit einer Innenraumbeleuchtung, deren Leuchtmittel ein Licht mit einer Lichtfarbe zwischen 4000K und 5300K abstrahlt.

Die Aufgabe der Erfindung wird gelöst durch ein Haushaltskältegerät, aufweisend einen wärmeisolierten Korpus mit einem Innenbehälter, der einen zum Lagern von Lebensmitteln vorgesehenen kühlbaren Innenraum begrenzt, eine Kältevorrichtung zum Kühlen des kühlbaren Innenraums, ein Türblatt, welches vorgesehen ist, im geschlossenen Zustand den kühlbaren Innenraum zu verschließen und im geöffneten Zustand zugänglich zu machen, und eine Innenraumbeleuchtung mit wenigstens einem Leuchtmittel zum zumindest teilweisen Beleuchten des kühlbaren Innenraums bei Aufgabe der vorliegenden Erfindung ist es, ein verbessertes Haushaltskältegerät mit einem kühlbaren Innenraum und einer Innenraumbeleuchtung zum zumindest teilweisen Beleuchten des kühlbaren Innenraums anzugeben.

Die Aufgabe der Erfindung wird gelöst durch ein Haushaltskältegerät gemäß dem Anspruch 1.

Das erfindungsgemäße Haushaltskältegerät umfasst den wärmeisolierten Korpus mit dem Innenbehälter, der den kühlbaren Innenraum begrenzt. Dieser wird mittels der Kältevorrichtung gekühlt. Diese ist vorzugsweise als ein dem Fachmann im Prinzip bekannter Kältemittelkreislauf ausgebildet und ist vorzugsweise derart ausgeführt, dass er den kühlbaren Innenraum zumindest in etwa auf eine vorgegebene Temperatur kühlt. Der kühlbare Innenraum ist zum Lagern von Lebensmitteln vorgesehen.

Der kühlbare Innenraum kann mittels des Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Das erfindungsgemäße Haushaltskältegerät ist vorzugsweise ein Haushaltskühlgerät. In diesem Fall wird der kühlbare Innenraum auf Temperaturen größer als 0°C gekühlt. Das erfindungsgemäße Haushaltskältegerät kann auch ein Haushaltsgefriergerät sein. In diesem Fall wird der kühlbare Innenraum auf Temperaturen kleiner als 0°C gekühlt. Das erfindungsgemäße Haushaltskältegerät kann aber auch eine Gefrier-Kühlkombination sein. Das erfindungsgemäße Haushaltskältegerät kann genau einen kühlbaren Innenraum, aber auch mehrere kühlbare Innenräume aufweisen, welche auch mittels jeweils einem Türblatt verschlossen und geöffnet werden können. Jede der kühlbaren Innenräume kann eine separate erfindungsgemäße Innraumbeleuchtung aufweisen.

Das erfindungsgemäße Haushaltskältegerät umfasst ferner die Innenraumbeleuchtung, welche bei geöffnetem Türblatt den kühlbaren Innenraum zumindest teilweise beleuchtet. Das erfindungsgemäße Haushaltskältegerät kann derart eingerichtet sein, dass die Innenraumbeleuchtung bei geschlossenem Türblatt ausgeschaltet ist, also lediglich bei geöffnetem Türblatt eingeschaltet ist. Für diesen Fall kann das erfindungsgemäße Haushaltskältegerät einen Türöffnungsschalter umfassen.

Das erfindungsgemäße Haushaltskältegerät kann auch als ein Weinkühlschrank ausgebildet sein, der vorgesehen ist, mit trinkbarer Flüssigkeit, insbesondere Wein, gefüllte Flaschen zu lagern. In diesem Fall ist das Türblatt vorzugsweise zumindest teilweise durchsichtig, indem es z.B. zumindest teilweise aus Glas gefertigt ist. Insbesondere in diesem Fall kann die Innenraumbeleuchtung den kühbaren Innenraum auch bei geschlossenem Türblatt beleuchten.

Erfindungsgemäß ist das Haushaltskältegerät eingerichtet, dass die Lichtfarbe des von der Innenraumbeleuchtung erzeugten Lichts einstellbar ist.

Üblicherweise werden die Lichtfarben in drei Grundbereiche unterteilt: Warmweißes Licht mit einer Farbtemperatur von kleiner als 3.300K, neutralweißes Licht im Bereich 3.300 bis 5.300K, und tageslichtweißes Licht mit einer Farbtemperatur größer als 5.300K.

Die Innenraumbeleuchtung bzw. deren Leuchtmittel ist also derart ausgeführt, dass das erzeugte Licht unterschiedlich weiß sein kann. Als wenigstens eines Leuchtmittel kann z.B. wenigstens eine LED mit unterschiedlichen Lichtfarben oder wenigstens eine sogenannte RGB(W)-LED (mehrfarbige LED) verwendet werden, welche insbesondere die verschiedenen Lichtfarben innerhalb eines LED-Chips vereinen.

Die der Lichtfarbe des von der Innenraumbeleuchtung erzeugten Lichts zugeordnete Farbtemperatur liegt zwischen 2400K und 6500K.

Das erfindungsgemäße Haushaltskältegerät ist eingerichtet, die Lichtfarbe des von der Innenraumbeleuchtung erzeugten Lichts in Abhängigkeit von der Beleuchtungsstärke und/oder der Lichtfarbe der Umgebung des Haushaltskältegerätes einzustellen. Um die Beleuchtungsstärke, d.h. die Helligkeit bzw. die Lichtintensität in der Umgebung des Haushaltskältegerätes und/oder die Lichtfarbe der Umgebung zu ermitteln, weist dieses einen Sensor zum Ermitteln der Beleuchtungsstärke und/oder der Lichtfarbe der Umgebung des Haushaltskältegerätes auf. Dann ist es dem erfindungsgemäßen Haushaltskältegerät ermöglicht, aufgrund der vom Sensor erzeugten Signale die Lichtfarbe des von der Innenraumbeleuchtung erzeugten Lichts in Abhängigkeit von der Beleuchtungsstärke und/oder der Lichtfarbe der Umgebung des Haushaltskältegerätes einzustellen. Die Signale des Sensors sind insbesondere elektrische Signale. Werden z.B. als Leuchtmittel die RGB(W)-LEDs verwendet, welche insbesondere die verschiedenen Lichtfarben innerhalb eines LED-Chips vereinen, dann kann z.B. der Sensor diesen Chip direkt ansteuern, damit die Innenraumbeleuchtung das Licht erzeugt, dessen Lichtfarbe von der Beleuchtungsstärke und/oder der Lichtfarbe der Umgebung abhängt.

Ein Beispiel eines geeigneten Sensors ist z.B. eine Photozelle. Der Sensor bzw. die Photozelle ist vorzugsweise in oder an der nach außen gerichteten Seite des Türblatts angeordnet.

Der Sensor bzw. die Photozelle kann z.B. mittig bezüglich der Seitenwände des Korpus in oder an der nach außen gerichteten Seite des Türblatts angeordnet sein. Der Sensor bzw. die Photozelle kann auch in einer oberen Ecke im oder am Türblatt angeordnet sein. Es ist auch möglich, dass der Sensor bzw. die Photozelle in einer nach außen gerichteten Seite des Korpus, insbesondere in oder an dessen Decke, z.B. in einer der dem Türblatt zugewandten Ecken angeordnet ist. Es kann genau ein Sensor bzw. genau eine Photozelle verwendet werden. Es können auch mehrere Sensoren bzw. Photozelle verwendet werden.

Ein Aspekt der Erfindung betrifft ein Verfahren zum Betreiben der Innenraumbeleuchtung des erfindungsgemäßen Haushaltskältegerätes, aufweisend folgende Verfahrensschritte:
- Ermitteln der Beleuchtungsstärke und/oder der Lichtfarbe des Lichts der Umgebung des Haushaltskältegerätes mittels eines Sensors zum Ermitteln der Beleuchtungsstärke und/oder der Lichtfarbe des Lichts der Umgebung des Haushaltskältegerätes, und
- automatisches Einstellen der Lichtfarbe des von der Innenraumbeleuchtung erzeugten Lichts in Abhängigkeit von der Beleuchtungsstärke und/oder der Lichtfarbe des Lichts der Umgebung des Haushaltskältegerätes aufgrund der vom Sensor erzeugten Signale.

Vorzugsweise ist das erfindungsgemäße Haushaltskältegerät derart eingerichtet bzw. ist es gemäß dem erfindungsgemäßen Verfahren vorgesehen, dass die der Lichtfarbe des von der Innenraumbeleuchtung erzeugten Lichts zugeordnete Farbtemperatur mit steigender Beleuchtungsstärke der Umgebung des Haushaltskältegerätes steigt. So ist gemäß dieser Variante das erfindungsgemäße Haushaltskältegerät derart eingerichtet, dass es aufgrund der von dem Sensor erzeugten Signale automatisch die Innenraumbeleuchtung derart ansteuert, dass die der Lichtfarbe des von der Innenraumbeleuchtung erzeugten Lichts zugeordnete Farbtemperatur mit steigender Beleuchtungsstärke der Umgebung des Haushaltskältegerätes steigt.

So kann es beispielsweise vorgesehen sein, dass bei einer Beleuchtungsstärke der Umgebung des Haushaltskältegerätes entsprechend der Helligkeit untertags die Lichtfarbe des Lichtes der Innenraumbeleuchtung ein tageslichtweises Licht mit einer Farbtemperatur größer als 5.300K, vorzugsweise von ca. 6500K, aufweist. Beispielsweise bei einer Beleuchtungsstärke der Umgebung des Haushaltskältegerätes entsprechend der Dämmerung oder bei dunkler Umgebung kann das Licht der Innenraumbeleuchtung ein warmweißes Licht mit einer Farbtemperatur von kleiner als 3.300K, insbesondere nachts vorzugsweise von ca. 2400K aufweisen. Somit leuchtet die Innenraumbeleuchtung während des Tages mit dem tageslichtweißes Licht und/oder abends bzw. nachts mit dem warmweißen Licht.

Nach einer weiteren Ausgestaltung des erfindungsgemäßen Haushaltskältegerätes ist dieses ausgebildet, automatisch die Lichtfarbe des von der Innenraumbeleuchtung erzeugten Lichts entsprechend der Lichtfarbe des Lichts der Umgebung einzustellen. So ist gemäß dieser Variante das erfindungsgemäße Haushaltskältegerät derart eingerichtet kann es gemäß einer Variante des erfindungsgemäßen Verfahrens vorgesehen sein, dass aufgrund der vom Sensor erzeugten Signale automatisch die Innenraumbeleuchtung derart ansteuert wird, dass die Lichtfarbe des von der Innenraumbeleuchtung erzeugten Lichts der Umgebung entspricht.

Gemäß einer weiteren Variante des erfindungsgemäßen Haushaltskältegerätes kann dieses ausgebildet sein bzw. gemäß einer weiteren Variante des erfindungsgemäßen Verfahrens kann es vorgesehen sein, dass die Helligkeit des von der Innenraumbeleuchtung erzeugten Lichts in Abhängigkeit der Beleuchtungsstärke der Umgebung des Haushaltkältegerätes eingestellt wird, insbesondere mit steigender Beleuchtungsstärke der Umgebung des Haushaltskältegerätes erhöht wird.

Zusätzlich kann das erfindungsgemäße Haushaltskältegerät also auch derart ausgeführt sein, dass das die Helligkeit des von der Innenraumbeleuchtung erzeugten Lichts von der Beleuchtungsstärke der Umgebung des Haushaltskältegeräts abhängt. Insbesondere steigt die Helligkeit der Innenraumbeleuchtung mit steigender Beleuchtungsstärke der Umgebung des Haushaltskältegerätes. Somit kann insbesondere die Gefahr verringert werden, dass eine Person, die im Dunklen das Türblatt des erfindungsgemäßen Haushaltskältegeräts öffnet, von der Innenraumbeleuchtung geblendet wird.

Vorzugsweise kann das erfindungsgemäße Haushaltskältegerät derart ausgeführt sein, dass es insbesondere aufgrund der von dem Sensor erzeugten Signale automatisch die Lichtfarbe des von der Innenraumbeleuchtung erzeugten Lichts entsprechend der Lichtfarbe der Umgebung und dessen Helligkeit aufgrund der Beleuchtungsstärke der Umgebung einstellt.

Das erfindungsgemäße Haushaltskältegerät kann eine Netzwerkschnittstelle aufweisen, über die z.B. das erfindungsgemäße Haushaltskältegerät mit wenigstens einem weiteren Haushaltsgerät vernetzt sein kann, also über seine Netzwerkschnittstelle mit diesem Haushaltsgerät zu kommunizieren vermag. Das Haushaltskältegerät ist dann vorzugsweise eingerichtet, über die Netzwerkschnittstelle eine Information über eine Lichtfarbe zu erhalten, um die Lichtfarbe des von der Innenraumbeleuchtung erzeugten Lichts entsprechend einzustellen. In diesem Fall kann die Lichtfarbe des Lichts der Innenraumbeleuchtung des Haushaltskältegeräts über ein Netzwerk eingestellt werden.

Ein Aspekt der Erfindung betrifft ein System, aufweisend das erfindungsgemäße Haushaltskältegerät und wenigstens ein Haushaltsgerät, welches eine Netzwerkschnittstelle und eine Beleuchtung aufweist, wobei das Haushaltsgerät eingerichtet ist, dass die Lichtfarbe des von der Beleuchtung erzeugten Lichts einstellbar ist. Das Haushaltskältegerät umfasst ebenfalls eine Netzwerkschnittstelle, sodass insbesondere das Haushaltsgerät und das Haushaltskältegerät über ihre Netzwerkschnittstellen miteinander zu kommunizieren vermögen.

Das Haushaltsgerät kann ein beliebiges Haushaltsgerät sein, z.B. ein weiteres Haushaltskältegerät mit einem kühlbaren Innenraum. In diesem Fall ist die Beleuchtung vorzugsweise ebenfalls eine Innenraumbeleuchtung zum Beleuchten des kühlbaren Innenraums.

Es ist es z.B. möglich, dass das erfindungsgemäße Haushaltskältegerät und das Haushaltsgerät jeweils über ihre Netzwerkschnittstellen eine Information über eine Lichtfarbe erhalten, damit das Haushaltskältegerät die Lichtfarbe des von der Innenraumbeleuchtung erzeugten Lichts und das Haushaltsgerät die Lichtfarbe des von der Beleuchtung erzeugten Lichts entsprechend einstellen. In diesem Fall kann die Lichtfarbe des Lichts der Innenraumbeleuchtung des Haushaltskältegeräts und die Lichtfarbe des Lichts der Beleuchtung über ein Netzwerk eingestellt werden. Somit ist es z.B. möglich, dass zumindest zwei miteinander vernetzte Haushaltsgeräte, von denen eines das erfindungsgemäße Haushaltskältegerät ist, derart miteinander kommunizieren, dass das Licht von Beleuchtungen der Haushaltsgeräte dieselbe Lichtfarbe aufweist.

Vorzugsweise kann es vorgesehen sein, dass das Haushaltsgerät eingerichtet ist, dem Haushaltskältegerät über die Netzwerkschnittstellen eine Information über eine Lichtfarbe zu übermitteln, damit das Haushaltskältegerät die Lichtfarbe des von der Innenraumbeleuchtung erzeugten Lichts entsprechend einstellt. In diesem Fall kann es vorgesehen sein, dass das Haushaltsgerät z.B. mittels wenigstens eines Sensors die Lichtfarbe des Lichts der Umgebung ermittelt. Dann kann es vorgesehen sein, dass das Haushaltsgerät automatisch die Lichtfarbe des von der Beleuchtung erzeugten Lichts entsprechend der Lichtfarbe des Lichts der Umgebung einstellt und dem Haushaltskältegerät eine Information über die Lichtfarbe des Lichts der Umgebung übermittelt, damit dieses automatisch die Lichtfarbe des Lichts der Innenraumbeleuchtung entsprechend einstellt. Dadurch kann in relativ einfacher Weise erreicht werden, dass die Beleuchtungen des Haushaltsgerätes und des Haushaltskältegerätes Licht derselben Lichtfarbe erzeugen, welche außerdem auch noch an die Lichtfarbe des Lichts der Umgebung des Haushaltskältegerätes bzw. des Haushaltsgerätes angepasst ist.

Es ist auch möglich, dass das Haushaltskältegerät eingerichtet ist, dem Haushaltsgerät über die Netzwerkschnittstellen eine Information über eine Lichtfarbe zu übermitteln, damit das Haushaltsgerät die Lichtfarbe des von der Beleuchtung erzeugten Lichts entsprechend einstellt. In diesem Fall kann es vorgesehen sein, dass das Haushaltskältegerät z.B. mittels wenigstens eines Sensors die Lichtfarbe der Umgebung ermittelt. Dann kann es vorgesehen sein, dass das Haushaltskältegerät automatisch die Lichtfarbe des von der Innenraumbeleuchtung erzeugten Lichts entsprechend der Lichtfarbe des Lichts der Umgebung einstellt und dem Haushaltsgerät eine Information über die Lichtfarbe des Lichts der Umgebung übermittelt, damit dieses automatisch die Lichtfarbe des Lichts der Beleuchtung entsprechend einstellt. Dadurch kann ebenfalls in relativ einfacher Weise erreicht werden, dass die Beleuchtungen des Haushaltsgerätes und des Haushaltskältegerätes Licht derselben Lichtfarbe erzeugen, welche außerdem auch noch an die Lichtfarbe des Lichts der Umgebung des Haushaltskältegerätes bzw. des Haushaltsgerätes angepasst ist.

Somit kann das erfindungsgemäße Verfahren folgende Verfahrensschritte aufweisen:
- Übermitteln einer Information über die ermittelte Lichtfarbe des Lichts der Umgebung des Haushaltskältegerätes an wenigstens ein Haushaltsgerät insbesondere über Netzwerkschnittstellen des Haushaltskältegerätes und des Haushaltsgerätes und
- automatisches Einstellen einer Beleuchtung des Haushaltsgerätes derart, dass die Lichtfarbe des von der Beleuchtung erzeugten Lichts entsprechend der übermittelten Lichtfarbe ist.

Je nach Ausführungsform des erfindungsgemäßen Haushaltskältegerätes bietet dieses vorzugsweise eine automatische Anpassung der Lichtfarbe und vorzugsweise auch der Intensität der Innenraumbeleuchtung an die Umgebungsbedingungen bei Tag, Nacht und/oder Dämmerung.

Vorzugsweise mittels des z.B. als Photozelle ausgebildeten Sensors kann dazu die Beleuchtungsstärke der Umgebung des Haushalskältegerätes, das vorzugsweise als Haushaltskühlgerät ausgebildet ist, gemessen werden. Der Sensor sollte dabei vorzugsweise so angebracht werden, dass er die Beleuchtungsstärke vor dem Haushaltskältegerät an dessen Aufstellungsort erfassen kann. Hierzu bietet sich insbesondere die Positionierung innerhalb des Türblatts oder auf der Geräteoberseite an. Bei Haushaltskältegeräten mit einer Türelektronik kann der Sensor auch dort untergebracht werden. Anhand des vom Sensor ermittelten Wertes kann ein relativ guter, wenn nicht gar optimaler und für das Auge und menschliche Sehen notwendiger Wert für die Lichtintensität innerhalb des Haushaltskältegerätes bestimmt werden, um die Innenraumbeleuchtung entsprechend automatisch einzustellen. Des Weiteren kann dadurch die Lichtfarbe an die Umgebungshelligkeiten angepasst werden. Für diese Anpassung an die Umgebung kann vorzugsweise ein Leuchtmittel für die Innenraumbeleuchtung verwendet werden, das die gewünschte Lichtfarbe erzeugen kann. Geeignete Leuchtmittel sind z.B. LEDs mit unterschiedlichen Lichtfarben oder sogenannte RGB(W)-LEDs, welche die verschiedenen Lichtfarben innerhalb eines LED-Chips vereinen.

Ein Vorteil des erfindungsgemäßen Haushaltskältegerätes kann in einer verbesserten, wenn nicht gar optimalen Anpassung der Lichtfarbe und gegebenenfalls auch der Intensitäten des Lichts der Innenraumbeleuchtung an die Umgebung des Haushaltskältegerätes liegen und der dadurch verbesserten Adaptionseigenschaften des menschlichen Auges und des subjektiven Empfindens der Haushaltskältegeräte-Ausleuchtung. Dem menschlichen Auge steht zur Anpassung an die Helligkeit der Mechanismus der Pupillenregelung zur Verfügung. Die Pupille wird hierbei durch die Iris bei steigender Helligkeit verengt und bei abnehmenden Helligkeiten zunehmend geöffnet. Zu große Helligkeitsänderungen führen zu einer verlängerten Anpassungsdauer an die unterschiedlichen Leuchtdichteniveaus. Durch Einführung dieser Anpassung kann einer das Haushaltskältegerät benutzenden Person diese Anpassungszeit verkürzt werden, was der Wahrnehmung des Haushaltskältegerätes und dessen Integration in die Umgebung unterstützt. Dieser Effekt kann durch die Anpassung der Lichtfarbe weiter gesteigert werden. So wird vorzugsweise während des Tages eine an das Tageslicht angepasst relativ hohe Lichtfarbe mit beispielsweise einer Farbtemperatur von 6500 K eingestellt, welche mit zunehmender Dämmerung bis hin zur Nacht ständig nach unten korrigiert wird. Während der Nacht kann die Lichtfarbe zur Unterstützung des Hormons Melatonin, welches im Körper zur Unterstützung der circadianen Rhythmen beiträgt, auf bis zu 2400 K eingestellt werden.

Ausführungsbeispiele der Erfindung sind exemplarisch in den beigefügten schematischen Zeichnungen dargestellt. Es zeigen:
- Figur 1: ein Haushaltskältegerät mit einem kühlbaren Innenraum und einem zum Öffnen und Verschließen des kühlbaren Innenraums vorgesehenem, geöffnet dargestellten Türblatts in einer perspektivischen Darstellung, und
- Figur 2: das Haushaltskältegerät mit geschlossenem Türblatt in einer perspektivischen Darstellung und ein weiteres Haushaltsgerät.

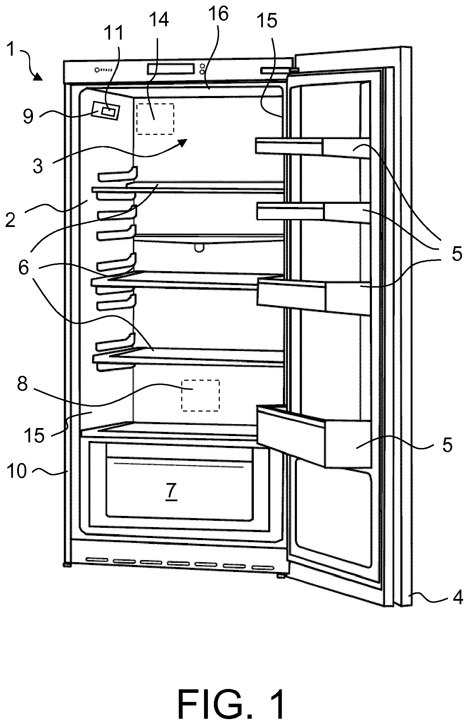

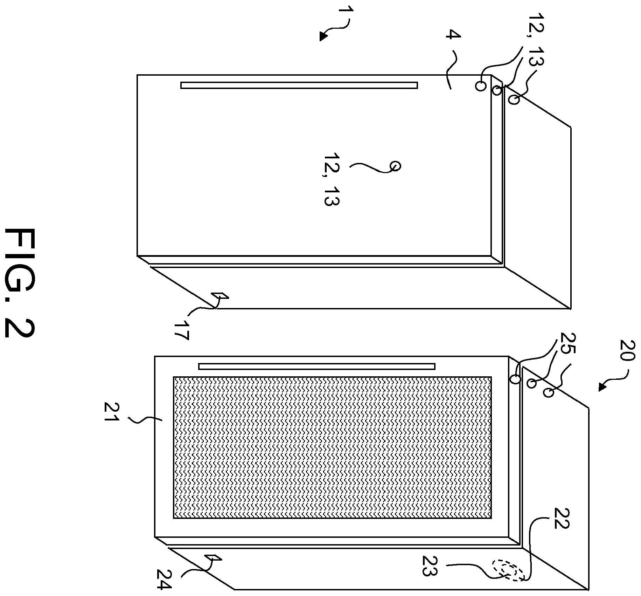

Die Figuren 1 und 2 zeigen in perspektivischen Darstellungen ein Haushaltskältegerät 1, das einen wärmeisolierten Korpus 10 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen. Der Korpus 10 umfasst insbesondere zwei Seitenwände 15 und ein Decke 16.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich. Das Haushaltskältegerät 1 mit geschlossenem Türblatt 4 ist in der Fig. 2 dargestellt.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst eine nicht näher dargestellte, dem Fachmann im Prinzip bekannte Kältevorrichtung vorzugsweise in Form eines Kältemittelkreislaufs zum Kühlen des kühlbaren Innenraums 3. Der Kältemittelkreislauf umfasst z.B. einen Verdichter, einen dem Verdichter nachgeschalteten Verflüssiger, eine dem Verflüssiger nachgeschaltete Drosselvorrichtung, die insbesondere als ein Drossel- oder Kapillarrohr ausgeführt ist, und einen Verdampfer, der zwischen der Drosselvorrichtung und dem Verdichter angeordnet ist.

Das Haushaltskältegerät 1 ist z.B. ein Haushaltskühlgerät und/oder kann als ein so genanntes No-Frost Haushaltskältegerät ausgeführt sein. Das Haushaltskältegerät 1 kann auch als ein so genannter Wein-Kühlschrank ausgebildet sein. In diesem Fall handelt es sich bei den Lebensmitteln vorzugsweise um mit Wein oder einer anderen trinkbaren Flüssigkeit gefüllte Flaschen. Das Türblatt 4 ist in diesem Fall vorzugsweise zumindest teilweise durchsichtig. Es ist z.B. zumindest teilweise aus Glas gefertigt. In diesem Fall ist es vorzugsweise vorgesehen, dass am Türblatt 4 keine Türabsteller 5 angeordnet sind.

Das Haushaltskältegerät 1 umfasst im Falle des vorliegenden Ausführungsbeispiels eine Steuervorrichtung 8, welche beispielsweise eine Elektronik umfasst und eingerichtet ist, die Kältevorrichtung, insbesondere den Verdichter des Kältemittelkreislaufs in für den Fachmann in allgemein bekannter Weise derart anzusteuern, dass der kühlbare Innenraum 3 zumindest in etwa eine vorgegebene oder vorgebbare Soll-Temperatur aufweist. Die Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der Steuervorrichtung 8 verbundenen Temperatursensor aufweisen.

Im Falle des vorliegenden Ausführungsbeispiels umfasst das Haushaltskältegerät 1 eine Innenraumbeleuchtung 9 mit wenigstens einem Leuchtmittel 11, welches bei eingeschalteter Innenraumbeleuchtung 9 ein Licht zum zumindest teilweisen Beleuchten des kühlbaren Innenraums 3 erzeugt. Bei geschlossenem Türblatt 4 ist die Innenraumbeleuchtung 9 ausgeschaltet. Um diesen Zustand zu erkennen, kann das Haushaltskältegerät 1 einen nicht näher dargestellten, dem Fachmann im Prinzip bekannten Türöffnungsschalter umfassen, sodass die Innenraumbeleuchtung 9 lediglich bei geöffnetem Türblatt 4 eingeschaltet ist. Insbesondere im Falle des Weinkühlschranks kann die Innenraumbeleuchtung 9 auch bei geschlossenem Türblatt 4 eingeschaltet sein.

Des Weiteren ist das Haushaltskältegerät 1 derart ausgeführt, dass es die Lichtfarbe des von dem wenigstens einen Leuchtmittel 11 erzeugten Lichts in Abhängigkeit der Helligkeit bzw. der Beleuchtungsstärke und/oder der Lichtfarbe der Umgebung des Haushaltskältegerätes 1 automatisch einstellt. Das von einem Leuchtmittel abgegebene Licht bzw. das Licht der Umgebung besitzt eine Eigenfarbe, die sogenannte Lichtfarbe, welche durch die Farbtemperatur in Kelvin definiert ist. Je höher diese Temperatur ist, desto weißer ist die Lichtfarbe.

Üblicherweise werden die Lichtfarben in drei Grundbereiche unterteilt: Warmweißes Licht mit einer Farbtemperatur von kleiner als 3.300K, neutralweißes Licht im Bereich 3.300 bis 5.300K, und tageslichtweißes Licht mit einer Farbtemperatur größer als 5.300K.

Die Innenraumbeleuchtung 9 bzw. deren Leuchtmittel 11 ist also derart ausgeführt, dass deren abgestrahltes Licht je nach Helligkeit bzw. Beleuchtungsstärke und/oder Lichtfarbe der Umgebung des Haushaltskältegeräts 1 unterschiedlich weiß ist. Als wenigstens eines Leuchtmittel 11 wird z.B. wenigstens eine LED mit unterschiedlichen Lichtfarben oder wenigstens eine sogenannte RGB(W)-LED verwendet, welche insbesondere die verschiedenen Lichtfarben innerhalb eines LED-Chips vereinen.

Um die Helligkeit bzw. die Beleuchtungsstärke und/oder die Lichtfarbe der Umgebung des Haushaltskältegerätes 1 zu ermitteln, kann dieses wenigstens einen Sensor 12 zum Erkennen der Helligkeit bzw. der Beleuchtungsstärke und/oder Lichtfarbe der Umgebung des Haushaltskältegerätes 1 umfassen.

Der Sensor 12 des Haushaltskältegerätes 1 ist vorzugsweise als wenigstens eine Photozelle 13 ausgeführt bzw. umfasst wenigstens eine Photozelle 13. Der Sensor 12 bzw. die Photozelle 13 ist vorzugsweise in oder an der nach außen gerichteten Seite des Türblatts 4 angeordnet.

Der Sensor 12 bzw. die Photozelle 13 kann z.B. mittig bezüglich der Seitenwände 15 des Korpus 10 in oder an der nach außen gerichteten Seite des Türblatts 4 angeordnet sein. Der Der Sensor 12 bzw. die Photozelle 13 kann auch in einer oberen Ecke im oder am Türblatt 4 angeordnet sein. Es auch möglich, dass der Sensor 12 bzw. die Photozelle 13 in den nach außen gerichteten Seite des Korpus 10, insbesondere der Decke 16, z.B. in einer der dem Türblatt 4 zugewandten Ecken angeordnet ist.

Im Falle des vorliegenden Ausführungsbeispiels weist das Haushaltskältegerät 1 eine mit dem wenigsten einen Sensor 12 verbundene Vorrichtung 14 zum Einstellen der Lichtfarbe der Innenraumbeleuchtung 9 bzw. des Leuchtmittels 11 auf. Diese Vorrichtung 14 umfasst eine Elektronik und steuert aufgrund der vom Sensor 12 erzeugten Signale bzw. aufgrund der vom Sensor 12 gemessenen Helligkeit bzw. Beleuchtungsstärke und/oder Lichtfarbe der Umgebung des Haushaltskältegerätes 1 die Innenraumbeleuchtung 9 bzw. das Leuchtmittel 11 derart an, dass sie bzw. es eine Lichtfarbe in Abhängigkeit der Helligkeit bzw. der Beleuchtungsstärke und/oder der Lichtfarbe der Umgebung des Haushaltskältegerätes 1 erzeugt. Die Vorrichtung 14 zum Einstellen der Lichtfarbe der Innenraumbeleuchtung 9 bzw. des Leuchtmittels 11 kann auch Teil der Steuervorrichtung 8 oder Teil des LED-Chips sein, falls verwendet.

Im Falle des vorliegenden Ausführungsbeispiels ist es insbesondere vorgesehen, dass die Farbtemperatur des von der Innenraumbeleuchtung 9 erzeugten Lichts mit steigender Helligkeit bzw. Beleuchtungsstärke der Umgebung der Haushaltskältegerätes 1 steigt. Entspricht z.B. die Helligkeit bzw. Beleuchtungsstärke der Umgebung der Haushaltskältegerätes 1 der Helligkeit untertags, so wird die Innenraumbeleuchtung 9 z.B. derart eingestellt, dass die Lichtfarbe des Lichtes ein tageslichtweises Licht mit einer Farbtemperatur größer als 5.300K, vorzugsweise von ca. 6500K, aufweist. Bei dunklerer Umgebung weist das Licht der Innenraumbeleuchtung 9 eine geringere Lichtfarbe auf. Beispielsweise bei einer Helligkeit der Umgebung entsprechend der Dämmerung oder gar bei absolut dunkler Umgebung weist das Licht der Innenraumbeleuchtung 9 ein warmweißes Licht mit einer Farbtemperatur von kleiner als 3.300K, vorzugsweise von ca. 2400K, auf.

Das Haushaltskältegerät 1 kann auch ausgebildete sein automatisch die Lichtfarbe des von der Innenraumbeleuchtung 9 erzeugten Lichts entsprechend der Lichtfarbe der Umgebung einstellt. So ist das Haushaltskältegerät 1 vorzugsweise derart eingerichtet, dass es aufgrund der vom Sensor 12 erzeugten Signale automatisch die Innenraumbeleuchtung 9 derart ansteuert, dass die Lichtfarbe des von der Innenraumbeleuchtung 9 erzeugten Lichts der Umgebung entspricht.

Zusätzlich kann es noch vorgesehen sein, dass die Helligkeit des von dem wenigstens einen Leuchtmittel 11 erzeugten Lichts von der Helligkeit bzw. der Beleuchtungsstärke der Umgebung des Haushaltskältegerätes 1 abhängt. Insbesondere ist es vorgesehen, dass die Helligkeit des von dem wenigstens einen Leuchtmittels 11 erzeugten Lichts größer ist, je heller die Umgebung des Haushaltskältegerätes 1 ist.

Das Haushaltskältegerät 1 kann eine Netzwerkschnittstelle 17 aufweisen, über die z.B. das Haushaltskältegerät 1 mit wenigstens einem weiteren Haushaltsgerät vernetzt sein kann, also über seine Netzwerkschnittstelle 17 mit diesem Haushaltsgerät zu kommunizieren vermag. Das Haushaltskältegerät 1 ist dann vorzugsweise eingerichtet, über die Netzwerkschnittstelle 17 eine Information über eine Lichtfarbe zu erhalten, um die Lichtfarbe des von der Innenraumbeleuchtung 9 erzeugten Lichts entsprechend einzustellen. In diesem Fall kann die Lichtfarbe des Lichts der Innenraumbeleuchtung 9 des Haushaltskältegeräts 1 über ein Netzwerk eingestellt werden.

Die Figur 2 zeigt als Beispiel eines solchen Haushaltsgerätes ein weiteres Haushaltskältegerät 20. Das weitere Haushaltskältegerät 20 umfasst ähnlich dem Haushaltskältegerät 1 ebenfalls einen kühlbaren Innenraum, ein Türblatt 21 zum Öffnen und Schließen des kühlbaren Innenraums, eine Kältevorrichtung zum Kühlen des kühlbaren Innenraums, und eine elektronische Steuervorrichtung, die eingerichtet ist, die Kältevorrichtung derart anzusteuern, vorzugsweise zu regeln, dass der kühlbare Innenraum in etwa ein vorgegebene Soll-Temperatur aufweist.

Im Falle des vorliegenden Ausführungsbeispiels ist das weitere Haushaltskältegerät 20 als ein Weinkühlschrank ausgebildet und dessen Türblatt 21 weist eine zumindest teilweise durchsichtige Scheibe auf, sodass die im kühlbaren Innenraum gelagerten Flaschen durch das geschlossene Türblatt 21 betrachtet werden können.

Das weitere Haushaltskältegerät 20 umfasst eine Beleuchtung, die insbesondere als Innenraumbeleuchtung 22 ausgeführt ist. Die Innenraumbeleuchtung 22 umfasst ein Leuchtmittel 23 und ist vorgesehen, den kühlbaren Innenraum auch bei geschlossenem Türblatt 21 zu beleuchten.

Des Weiteren ist das weitere Haushaltskältegerät 20 derart ausgeführt, dass die Lichtfarbe des von dem wenigstens einen Leuchtmittel 23 erzeugten Lichts einstellbar ist. Das weitere Haushaltskältegerät 20 umfasst eine Netzwerkschnittstelle 24. Das Haushaltskältegerät 1 und das weitere Haushaltskältegerät 20 sind vorzugsweise derart ausgeführt, dass sie über ihre Netzwerkschnittstellen 17, 24 miteinander kommunizieren können.

Im Falle des vorliegenden Ausführungsbeispiels ist es vorgesehen, dass das Haushaltskältegerät 1 dem weiteren Haushaltskältegerät 20 über die Netzwerkschnittstellen 17, 24 eine Information über eine Lichtfarbe übermittelt, damit das weitere Haushaltskältegerät 20 automatisch die Lichtfarbe des von seiner Innenraumbeleuchtung 22 erzeugten Lichts entsprechend einstellt. Die Lichtfarbe ist vorzugsweise die Lichtfarbe des Lichts der Umgebung, welche das Haushaltskältegerät 1 mittels seiner Sensoren 12 ermittelt hat. Dadurch kann in relativ einfacher Weise erreicht werden, dass die Innenraumbeleuchtungen 9, 23 der Haushaltskältegerätes 1, 20 jeweils Licht derselben Lichtfarbe erzeugen, welche außerdem auch noch an die Lichtfarbe des Lichts der Umgebung angepasst ist.

Es kann auch vorgesehen sein, dass das weitere Haushaltskältegerät 20 dem Haushaltskältegerät 1 über die Netzwerkschnittstellen 17, 24 eine Information über eine Lichtfarbe übermittelt, damit das Haushaltskältegerät 1 die Lichtfarbe des von seiner Innenraumbeleuchtung 9 erzeugten Lichts entsprechend einstellt. Die Lichtfarbe ist vorzugsweise die Lichtfarbe des Lichts der Umgebung, welche das weitere Haushaltskältegerät 20 z.B. mittels geeigneter Sensoren 24 ermittelt hat. Dadurch kann in relativ einfacher Weise erreicht werden, dass die Innenraumbeleuchtungen 9, 23 der Haushaltskältegerätes 1, 20 jeweils Licht derselben Lichtfarbe erzeugen, welche außerdem auch noch an die Lichtfarbe des Lichts der Umgebung angepasst ist.

Es kann auch vorgesehen sein, dass die Lichtfarbe und/oder die Helligkeit der Innenraumbeleuchtung 9 bzw. des wenigstens einen Leuchtmittels 11 manuell einstellbar ist. In diesem Fall umfasst das Haushaltskältegerät 1 entsprechende Eingabemittel.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: Steuervorrichtung
- 9: Innenraumbeleuchtung
- 10: Korpus
- 11: Leuchtmittel
- 12: Sensor
- 13: Photozelle
- 14: Vorrichtung
- 15: Seitenwände
- 16: Decke
- 17: Netzwerkschnittstelle
- 20: Haushaltskältegerät
- 21: Türblatt
- 22: Innenraumbeleuchtung
- 23: Leuchtmittel
- 24: Netzwerkschnittstelle
- 25: Sensoren

## Patentansprüche

1. Haushaltskältegerät (1), aufweisend einen wärmeisolierten Korpus (10) mit einem Innenbehälter (2), der einen zum Lagern von Lebensmitteln vorgesehenen kühlbaren Innenraum (3) begrenzt, eine Kältevorrichtung zum Kühlen des kühlbaren Innenraums (3), ein insbesondere schwenkbar relativ zum Korpus (10) gelagertes Türblatt (4), welches vorgesehen ist, im geschlossenen Zustand den kühlbaren Innenraum (3) zu verschließen und im geöffneten Zustand zugänglich zu machen, und eine Innenraumbeleuchtung (9) mit wenigstens einem Leuchtmittel (11) zum zumindest teilweisen Beleuchten des kühlbaren Innenraums (3) bei geöffnetem Türblatt (4), die durch die Farbtemperatur in Kelvin definierte Lichtfarbe des von der Innenraumbeleuchtung (9) erzeugten Lichts einstellbar ist, **dadurch gekennzeichnet, dass** die der Lichtfarbe des von der Innenraumbeleuchtung (9) erzeugten Lichts zugeordnete Farbtemperatur zwischen 2400K und 6500K liegt, das Haushaltskältegerät (1) eingerichtet ist, die Lichtfarbe des von der Innenraumbeleuchtung (9) erzeugten Lichts automatisch in Abhängigkeit von der Beleuchtungsstärke und/oder der Lichtfarbe des Lichts der Umgebung des Haushaltskältegerätes (1) einzustellen, und das Haushaltskältegerät (1) einen Sensor (12) zum Ermitteln der Beleuchtungsstärke und/oder der Lichtfarbe des Lichts der Umgebung des Haushaltskältegerätes (1) umfasst, sodass das Haushaltskältegerät (1) aufgrund der vom Sensor (12) erzeugten Signale die Lichtfarbe des von der Innenraumbeleuchtung (9) erzeugten Lichts in Abhängigkeit von der Beleuchtungsstärke und/oder der Lichtfarbe des Lichts der Umgebung des Haushaltskältegerätes (1) automatisch einzustellen vermag.

2. Haushaltskältegerät nach Anspruch 1, **dadurch gekennzeichnet, dass** die der Lichtfarbe des von der Innenraumbeleuchtung (9) erzeugten Lichts zugeordnete Farbtemperatur mit steigender Beleuchtungsstärke der Umgebung des Haushaltskältegerätes (1) steigt.

3. Haushaltskältegerät nach Anspruch 1 oder 2, **dadurch gekennzeichnet, dass** die Lichtfarbe des von der Innenraumbeleuchtung (9) erzeugten Lichts der Lichtfarbe des Lichts der Umgebung entspricht.

4. Haushaltskältegerät nach einem der Ansprüche 1 bis 3, **dadurch gekennzeichnet, dass** bei einer Beleuchtungsstärke der Umgebung des Haushaltskältegerätes (1) entsprechend der Helligkeit untertags die Lichtfarbe des Lichtes der Innenraumbeleuchtung (9) ein tageslichtweises Licht mit einer Farbtemperatur größer als 5.300K, vorzugsweise von ca. 6500K, aufweist, und/oder dass bei einer Beleuchtungsstärke der Umgebung des Haushaltskältegerätes (1) entsprechend der Dämmerung oder bei dunkler Umgebung das Licht der Innenraumbeleuchtung (9) ein warmweißes Licht mit einer Farbtemperatur von kleiner als 3.300K, vorzugsweise von ca. 2400K aufweist.

5. Haushaltskältegerät nach einem der Ansprüche 1 bis 4, **dadurch gekennzeichnet, dass** das Haushaltskältegerät (1) ausgebildet ist, die Helligkeit des von der Innenraumbeleuchtung (9) erzeugten Lichts in Abhängigkeit der Beleuchtungsstärke der Umgebung des Haushaltkältegerätes (1) einzustellen, insbesondere mit steigender Beleuchtungsstärke der Umgebung des Haushaltskältegerätes (1) zu erhöhen.

6. Haushaltskältegerät nach einem der Ansprüche 1 bis 5, **gekennzeichnet durch** eine Netzwerkschnittstelle (17), wobei das Haushaltskältegerät (1) insbesondere eingerichtet ist, über die Netzwerkschnittstelle (17) eine Information über eine Lichtfarbe zu erhalten, um die Lichtfarbe des von der Innenraumbeleuchtung (9) erzeugten Lichts entsprechend einzustellen.

7. System, aufweisend ein Haushaltskältegerät (1) nach Anspruch 6 und wenigstens ein Haushaltsgerät (20), welches eine Netzwerkschnittstelle (24) und eine Beleuchtung (22) aufweist, wobei die Lichtfarbe des von der Beleuchtung (22) erzeugten Lichts einstellbar ist, und das Haushaltskältegerät (1) und das Haushaltsgerät (20) über ihre Netzwerkschnittstellen (17, 24) miteinander zu kommunizieren vermögen.

8. System nach Anspruch 7, **dadurch gekennzeichnet, dass** das Haushaltsgerät (20) eingerichtet ist, dem Haushaltskältegerät (1) über die Netzwerkschnittstellen (17, 24) eine Information über eine Lichtfarbe zu übermitteln, damit das Haushaltskältegerät (1) die Lichtfarbe des von der Innenraumbeleuchtung (9) erzeugten Lichts automatisch entsprechend einstellt, und/oder das Haushaltskältegerät (1) eingerichtet ist, dem Haushaltsgerät (20) über die Netzwerkschnittstellen (17, 24) eine Information über eine Lichtfarbe zu übermitteln, damit das Haushaltsgerät (20) automatisch die Lichtfarbe des von der Beleuchtung (22) erzeugten Lichts entsprechend einstellt.

9. Verfahren zum Betreiben einer Innenraumbeleuchtung (9) eines Haushaltskältegerätes (1) nach einem der Ansprüche 1 bis 8, aufweisend folgende Verfahrensschritt:
- Ermitteln der Beleuchtungsstärke und/oder der Lichtfarbe des Lichts der Umgebung des Haushaltskältegerätes (1) mittels eines Sensors (12) zum Ermitteln der Beleuchtungsstärke und/oder der Lichtfarbe des Lichts der Umgebung des Haushaltskältegerätes (1), unc
**gekennzeichnet durch** den folgenden Verfahrensschritt:
- automatisches Einstellen der Lichtfarbe des von der Innenraumbeleuchtung (9) erzeugten Lichts in Abhängigkeit von der Beleuchtungsstärke und/oder der Lichtfarbe des Lichts der Umgebung des Haushaltskältegerätes (1) aufgrund der vom Sensor (12) erzeugten Signale.

10. Verfahren nach Anspruch 9, aufweisend automatisches Einstellen der Lichtfarbe des von der Innenraumbeleuchtung (9) erzeugten Lichts aufgrund der vom Sensor (12) erzeugten Signale, sodass die Lichtfarbe des von der Innenraumbeleuchtung (9) erzeugten Lichts der Lichtfarbe des Lichts der Umgebung entspricht.

11. Verfahren nach Anspruch 10 oder 11, aufweisend folgende Verfahrensschritte:
- Übermitteln einer Information über die ermittelte Lichtfarbe des Lichts der Umgebung des Haushaltskältegerätes (1) an wenigstens ein Haushaltsgerät (20) insbesondere über Netzwerkschnittstellen (17, 24) des Haushaltskältegerätes (1) und des Haushaltsgerätes (24) und
- automatisches Einstellen einer Beleuchtung (22) des Haushaltsgerätes (24) derart, dass die Lichtfarbe des von der Beleuchtung (22) erzeugten Lichts entsprechend der übermittelten Lichtfarbe ist.

## Claims

1. Household refrigeration appliance, having a thermally insulated carcass (10) with an inner container (2), which delimits a coolable interior (3) provided for the storage of food, a refrigeration apparatus for cooling the coolable interior (3), a door leaf (4), which is supported in particular in a pivotable manner in relation to the carcass (10) and which is provided to close the coolable interior (3) in the closed state and to make said coolable interior (3) accessible in the opened state, and an interior lighting system (9) with at least one lighting means (11) for at least partially lighting the coolable interior (3) when the door leaf (4) is opened, it is possible to set the light colour, defined by the colour temperature in Kelvin, of the light generated by the interior lighting system (9), **characterised in that** the colour temperature assigned to the light colour of the light generated by the interior lighting system (9) is between 2,400 K and 6,500 K, the household refrigeration appliance (1) is designed to set the light colour of the light generated by the interior lighting system (9) automatically as a function of the lighting strength and/or the light colour of the light of the surroundings of the household refrigeration appliance (1), and the household refrigeration appliance (1) has a sensor (12) for determining the lighting strength and/or the light colour of the light of the surroundings of the household refrigeration appliance (1), so that the household refrigeration appliance (1) is able to set the light colour of the light generated by the interior lighting system (9) as a function of the lighting strength and/or the light colour of the light of the surroundings of the household refrigeration appliance (1) automatically based on the signals generated by the sensor (12).

2. Household refrigeration appliance according to claim 1, **characterised in that** the colour temperature assigned to the light colour of the light generated by the interior lighting system (9) increases as the lighting strength of the surroundings of the household refrigeration appliance (1) increases.

3. Household refrigeration appliance according to claim 1 or 2, **characterised in that** the light colour of the light generated by the interior lighting system (9) corresponds to the light colour of the light of the surroundings.

4. Household refrigeration appliance according to one of claims 1 to 3, **characterised in that** when the lighting strength of the surroundings of the household refrigeration appliance (1) corresponds to the brightness during the day, the light colour of the light of the interior lighting system (9) has a daylight light with a colour temperature greater than 5,300 K, preferably of approx. 6,500 K and/or when the lighting strength of the surroundings of the household refrigeration appliance (1) corresponds to dusk or when said surroundings are dark, the light of the interior lighting system (9) has a warm white light with a colour temperature of below 3,300 K, preferably of approx. 2,400 K.

5. Household refrigeration appliance according to one of claims 1 to 4, **characterised in that** the household refrigeration appliance (1) is configured to set the brightness of the light generated by the interior lighting system (9) as a function of the lighting strength of the surroundings of the household refrigeration appliance (1), in particular to increase it as the lighting strength of the surroundings of the household refrigeration appliance (1) increases.

6. Household refrigeration appliance according to one of claims 1 to 5, **characterised by** a network interface (17), wherein the household refrigeration appliance (1) is designed in particular to receive information about a light colour by way of the network interface (17) in order to set the light colour of the light generated by the interior lighting system (9) correspondingly.

7. System, having a household refrigeration appliance (1) according to claim 6 and at least one household appliance (20), which has a network interface (24) and a lighting system (22), wherein it is possible to set the light colour of the light generated by the lighting system (22) and the household refrigeration appliance (1) and the household appliance (20) are able to communicate with one another by way of their network interfaces (17, 24).

8. System according to claim 7, **characterised in that** the household appliance (20) is designed to transmit information about a light colour to the household refrigeration appliance (1) by way of the network interfaces (17, 24) so that the household refrigeration appliance (1) sets the light colour of the light generated by the interior lighting system (9) automatically in a corresponding manner and/or the household refrigeration appliance (1) is designed to transmit information about a light colour to the household appliance (20) by way of the network interfaces (17, 24) so that the household appliance (20) sets the light colour of the light generated by the lighting system (22) automatically in a corresponding manner.

9. Method for operating an interior lighting system (9) of a household refrigeration appliance (1) according to one of claims 1 to 8, having the following method step:
- Determining the lighting strength and/or the light colour of the light of the surroundings of the household refrigeration appliance (1) by means of a sensor (12) for determining the lighting strength and/or the light colour of the light of the surroundings of the household refrigeration appliance (1) and
**characterised by** the following method step:
- Setting the light colour of the light generated by the interior lighting system (9) automatically as a function of the lighting strength and/or the light colour of the light of the surroundings of the household refrigeration appliance (1) based on the signals generated by the sensor (12).

10. Method according to claim 9, including automatic setting of the light colour of the light generated by the interior lighting system (9) based on the signals generated by the sensor (12) so that the light colour of the light generated by the interior lighting system (9) corresponds to the light colour of the light of the surroundings.

11. Method according to claim 10 or 11, having the following method steps:
- Transmitting information about the determined light colour of the light of the surroundings of the household refrigeration appliance (1) to at least one household appliance (20) in particular by way of network interfaces (17, 24) of the household refrigeration appliance (1) and the household appliance (24) and
- Setting a lighting system (22) of the household appliance (24) automatically in such a manner that the light colour of the light generated by the lighting system (22) corresponds to the transmitted light colour.

## Revendications

1. Réfrigérateur domestique (1), présentant un corps (10) isolé de la chaleur avec un récipient intérieur (2) qui délimite un espace intérieur (3) pouvant être réfrigéré prévu pour le stockage de produits alimentaires, un dispositif réfrigérant permettant de réfrigérer l'espace intérieur (3) pouvant être réfrigéré, un vantail de porte (4) en particulier monté de manière pivotante par rapport au corps (10), lequel vantail de porte est prévu pour refermer à l'état fermé l'espace intérieur (3) pouvant être réfrigéré et le rendre accessible à l'état ouvert, et un éclairage d'espace intérieur (9) avec au moins une ampoule (11) permettant au moins un éclairage partiel de l'espace intérieur (3) pouvant être réfrigéré lorsque le vantail de porte (4) est ouvert, la couleur de lumière, définie en Kelvin par le biais de la température des couleurs, de la lumière générée par l'éclairage d'espace intérieur (9) est réglable, **caractérisé en ce que** la température de couleur associée à la couleur de lumière générée par l'éclairage d'espace intérieur (9) se situe entre 2 400 K et 6 500 K, le réfrigérateur domestique (1) est conçu pour régler la couleur de lumière de la lumière générée par l'éclairage d'espace intérieur (9) automatiquement en fonction de la puissance d'éclairage et/ou de la couleur de lumière de la lumière de l'environnement du réfrigérateur domestique (1), et le réfrigérateur domestique (1) comprend un capteur (12) permettant la détermination de la puissance d'éclairage et/ou de la couleur de lumière de la lumière de l'environnement du réfrigérateur domestique (1), de sorte que le réfrigérateur domestique (1) en raison des signaux générés par le capteur (12) a la capacité de régler automatiquement la couleur de lumière de la lumière générée par l'éclairage d'espace intérieur (9) en fonction de la puissance d'éclairage et/ou de la couleur de lumière de la lumière de l'environnement du réfrigérateur domestique (1).

2. Réfrigérateur domestique selon la revendication 1, **caractérisé en ce que** la couleur de lumière de la température de couleur associée à la couleur de lumière de la lumière générée par l'éclairage d'espace intérieur (9) augmente avec la puissance d'éclairage en augmentation de l'environnement du réfrigérateur domestique (1).

3. Réfrigérateur domestique selon la revendication 1 ou 2, **caractérisé en ce que** la couleur de lumière de la lumière générée par l'éclairage d'espace intérieur (9) correspond à la couleur de lumière de la lumière de l'environnement.

4. Réfrigérateur domestique selon l'une des revendications 1 à 3, **caractérisé en ce qu'**en présence d'une puissance d'éclairage de l'environnement du réfrigérateur domestique (1) correspondant à la clarté pendant la journée la couleur de lumière de la lumière de l'éclairage d'espace intérieur (9) présente une lumière du jour avec une température de couleur supérieure à 5 300 K, de préférence d'environ 6 500 K, et/ou **en ce qu'**en présence d'une puissance d'éclairage de l'environnement du réfrigérateur domestique (1) correspondant au crépuscule ou dans un environnement sombre la lumière de l'éclairage d'espace intérieur (9) présente une lumière blanche chaude avec une température de couleur inférieure à 3 300 K, de préférence d'environ 2 400 K.

5. Réfrigérateur domestique selon l'une des revendications 1 à 4, **caractérisé en ce que** le réfrigérateur domestique (1) est configuré pour régler la clarté de la lumière générée par l'éclairage d'espace intérieur (9) en fonction de la puissance d'éclairage de l'environnement du réfrigérateur domestique (1), en particulier pour augmenter lorsque la puissance d'éclairage de l'environnement du réfrigérateur domestique (1) augmente.

6. Réfrigérateur domestique selon l'une des revendications 1 à 5, **caractérisé par** une interface réseau (17), dans lequel le réfrigérateur domestique (1) est en particulier conçu pour recevoir une information concernant une couleur de lumière par le biais de l'interface réseau (17) pour régler de manière correspondante la couleur de lumière de la lumière générée par l'éclairage d'espace intérieur (9).

7. Système, présentant un réfrigérateur domestique (1) selon la revendication 6 et au moins un appareil domestique (20), qui présente une interface réseau (24) et un éclairage (22), dans lequel la couleur de lumière de la lumière générée par l'éclairage (22) est réglable, et le réfrigérateur domestique (1) et l'appareil domestique (20) ont la capacité de communiquer l'un avec l'autre par l'intermédiaire de leurs interfaces réseau (17, 24).

8. Système selon la revendication 7, **caractérisé en ce que** l'appareil domestique (20) est conçu pour transmettre au réfrigérateur domestique (1) par le biais des interfaces réseau (17, 24) une information concernant une couleur de lumière afin que le réfrigérateur domestique (1) règle automatiquement de manière correspondante la couleur de lumière de la lumière générée par l'éclairage d'espace intérieur (9) et/ou le réfrigérateur domestique (1) est conçu pour transmettre à l'appareil domestique (20) par le biais des interfaces réseau (17, 24) une information concernant une couleur de lumière, afin que l'appareil domestique (20) règle de manière correspondante automatiquement la couleur de lumière de la lumière générée par l'éclairage (22).

9. Procédé permettant de faire fonctionner un éclairage d'espace intérieur (9) d'un réfrigérateur domestique (1) selon l'une des revendications 1 à 8, présentant les étapes de procédé suivantes :
- détermination de la puissance d'éclairage et/ou de la couleur de lumière de la lumière de l'environnement du réfrigérateur domestique (1) au moyen d'un capteur (12) permettant de déterminer la puissance d'éclairage et/ou la couleur de lumière de la lumière de l'environnement du réfrigérateur domestique (1), et
**caractérisé par** l'étape de procédé suivante :
- réglage automatique de la couleur de lumière de la lumière générée par l'éclairage d'espace intérieur (9) en fonction de la puissance d'éclairage et/ou de la couleur de lumière de la lumière de l'environnement du réfrigérateur domestique (1) en raison des signaux générés par le capteur (12).

10. Procédé selon la revendication 9, présentant un réglage automatique de la couleur de lumière de la lumière générée par l'éclairage d'espace intérieur (9) en raison des signaux générés par le capteur (12), de sorte que la couleur de lumière de la lumière générée par l'éclairage d'espace intérieur (9) correspond à la couleur de lumière de la lumière de l'environnement.

11. Procédé selon la revendication 10 ou 11, présentant les étapes de procédé suivantes :
- transmission d'une information concernant la couleur de lumière déterminée de la lumière de l'environnement du réfrigérateur domestique (1) à au moins un appareil domestique (20) en particulier par le biais d'interfaces réseau (17, 24) du réfrigérateur domestique (1) et de l'appareil domestique (24) et
- réglage automatique d'un éclairage (22) de l'appareil domestique (24) de telle sorte que la couleur de lumière de la lumière générée par l'éclairage (22) est conforme à la couleur de lumière transmise.
